(19) **Europäisches Patentamt European Patent Office Office européen des brevets**

(11) **EP 1 340 111 B1**

(12) **FASCICULE DE BREVET EUROPEEN**

(45) Date de publication et mention de la délivrance du brevet:
**09.05.2007 Bulletin 2007/19**

(21) Numéro de dépôt: **01999837.6**

(22) Date de dépôt: **04.12.2001**

(51) Int Cl.:
***G02B 6/36*** *(2006.01)*

(86) Numéro de dépôt international:
**PCT/FR2001/003822**

(87) Numéro de publication internationale:
**WO 2002/046798 (13.06.2002 Gazette 2002/24)**

(54) **STRUCTURE DE SEPARATION ET DE PREPOSITIONNEMENT D'UN ENSEMBLE DE FIBRES ET DISPOSITIF DESTINE A RECEVOIR UN ENSEMBLE DE FIBRES**

STRUKTUR ZUR TRENNUNG UND VOR-AUSRICHTUNG EINER FASERANORDNUNG UND VORRICHTUNG FÜR EINE FASERANORDNUNG

STRUCTURE FOR SEPARATING AND PRE-POSITIONING AN ASSEMBLY OF FIBRES AND DEVICE DESIGNED TO RECEIVE AN ASSEMBLY OF FIBRES

(84) Etats contractants désignés:
**DE GB IT**

(30) Priorité: **05.12.2000 FR 0015729**

(43) Date de publication de la demande:
**03.09.2003 Bulletin 2003/36**

(73) Titulaires:
• **COMMISSARIAT A L'ENERGIE ATOMIQUE**
  **75015 Paris (FR)**
• **RADIALL**
  **93116 Rosny-Sous-Bois (FR)**

(72) Inventeurs:
• **OLLIER, Eric**
  **F-38100 GRENOBLE (FR)**
• **POUJARD, Hervé**
  **F-38110 DOLOMIEU (FR)**

(74) Mandataire: **Brykman, Georges et al**
  **Brevatome**
  **3, rue du Docteur Lancereaux**
  **75008 Paris (FR)**

(56) Documents cités:
| WO-A-00/26707 | DE-A- 19 711 283 |
| FR-A- 2 756 056 | US-A- 5 400 426 |
| US-A- 5 692 089 | US-A- 5 901 262 |

**EP 1 340 111 B1**

## Description

L'invention concerne une structure de séparation et de prépositionnement d'un ensemble de fibres ainsi qu'un dispositif destiné à recevoir un ensemble de fibres séparées et prépositionnées à l'aide d'une structure selon l'invention.

L'invention s'applique, entre autres, à la connexion de fibres optiques à un dispositif optique. Il s'agit alors de mettre en regard, le plus précisément possible, chaque fibre optique avec un composant, par exemple un microguide, appartenant au dispositif optique.

Le problème qui se pose est celui de l'alignement de l'axe optique d'une fibre avec l'axe optique du composant. Les fluctuations de fabrication de toutes sortes (excentricité du coeur des fibres, variations sur le diamètre extérieur des fibres, dimensions des dispositifs optiques intégrés, inexistence de repères mécaniques précis) sont autant d'éléments qui rendent l'alignement difficile à réaliser.

Certains fabricants de composants optiques livrent des composants intégrés dont la connexion aux fibres a préalablement été effectuée en usine. Le composant est alors fourni avec des amorces de fibres. Ces amorces de fibres, communément appelées "pigtails", sont fragiles et, partant, difficiles à manipuler. Pendant toutes les phases de manipulation, notamment lors du montage du composant sur une carte électronique, l'utilisateur doit ainsi prendre garde à ne pas les détériorer.

En usine, l'alignement des fibres avec les microguides est réalisé soit à l'aide de repères mécaniques de précision, soit en utilisant des méthodes dites "actives" d'alignement par couplage qui consistent à injecter de la lumière dans l'un des microguides et à aligner la fibre en maximisant le taux de lumière couplée. Ces méthodes d'alignement sont des méthodes coûteuses qui prennent du temps pour être mises en oeuvre et qui nécessitent des équipements dédiés de haute précision.

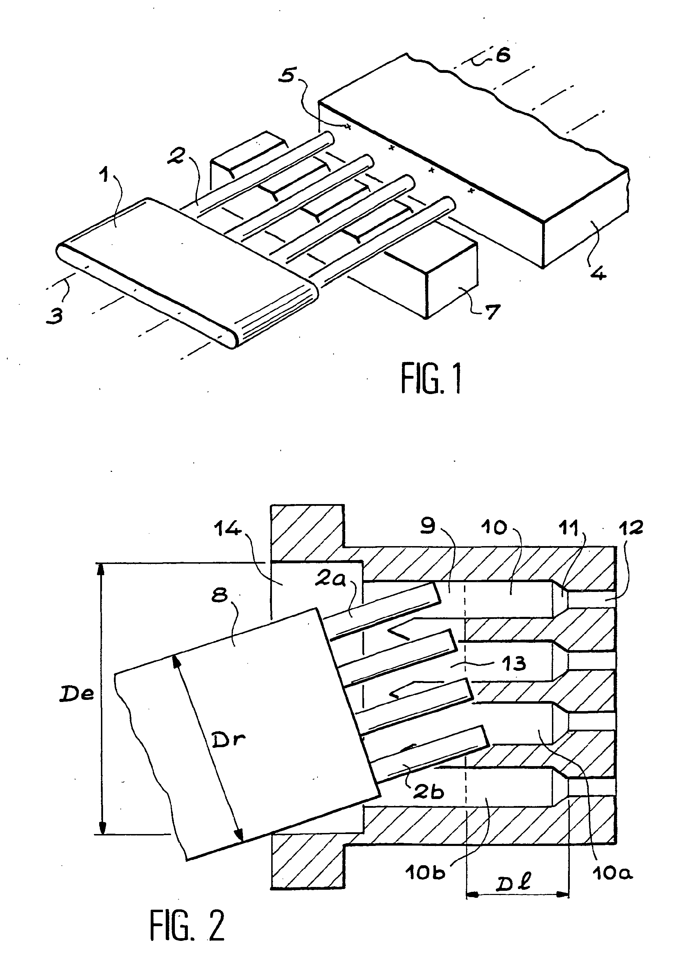

Un dispositif d'alignement par couplage de lumière est représenté en figure 1. Un ruban 1 muni de fibres 2 est placé en regard d'un dispositif optique 4. L'axe optique 6 d'un microguide 5 est aligné avec l'axe optique 3 d'une fibre 2 à l'aide d'un faisceau de lumière (non représenté sur la figure) pour maximiser la transmission optique entre la fibre et le microguide. Chaque fibre optique 2 est positionnée dans une entaille pratiquée dans un support 7 qui est ensuite fixé au dispositif optique 4.

La figure 2 représente un dispositif connu d'alignement par guidage mécanique. Le dispositif de la figure 2 est communément utilisé pour les férules de type MT. L'introduction d'un ruban 8 muni de fibres consiste à placer visuellement les fibres dans des vagues 9 à fond circulaire ou en forme de V. Les fibres sont ensuite glissées dans des canaux cylindriques 10 de diamètre, par exemple, de l'ordre de 200$\mu$m pour des fibres de 125 $\mu$m de diamètre, sur une distance D1, par exemple de l'ordre de 1 mm. Un raccordement conique 11 permet de guider les fibres jusqu'à des trous de précision 12. Selon ce mode d'alignement, une distance intermédiaire D1 est donc nécessaire pour permettre l'introduction de la fibre dans le trou de précision 12.

Le préguidage initial des fibres est assuré par les vagues 9. Les fibres ne sont pas directement introduites dans les canaux cylindriques, une ouverture 13 permettant de voir leur extrémité. -

Ce dispositif présente le risque, pour l'utilisateur, de ne pas introduire les fibres dans les canaux qui leur sont destinés. C'est le cas, par exemple, de la fibre 2b telle que représentée en figure 2. En effet, l'angle autorisé par l'ajustement du ruban 8 de largeur Dr dans le logement 14 de largeur De est grand. La fibre qui bute en premier sur le logement 14 (fibre 2a) peut fléchir, permettant ainsi à la fibre située, dans cet exemple, à l'opposé de la fibre 2a (fibre 2b) de s'introduire dans un canal qui ne lui est pas destiné (canal 10a, alors que le canal devant recevoir la fibre 2b est le canal 10b). Cette erreur de positionnement est fatale au ruban de fibres. Seule une grande acuité visuelle et tactile permet éventuellement d'éviter ce dysfonctionnement.

D'autres solutions sont connues de l'art antérieur. Les motifs permettant de réaliser l'alignement des fibres peuvent ainsi se présenter sous la forme d'encoches directement gravées dans le composant optique. Une fibre optique encastrée dans une encoche est alors directement mise en regard d'un microguide. Ce type de connexion présente l'avantage de ne pas nécessiter une mise en oeuvre de l'alignement par couplage de lumière. Cependant, la dimension des encoches n'étant pas ajustée à la dimension des fibres, l'alignement des axes optiques entre fibres et microguides reste problématique.

Le brevet US 5 440 657 divulgue une épissure dont le ruban est guidé par un boîtier dont la structure présente un angle d'approche permettant aux fibres d'être guidées vers des canaux d'alignement séparés par des arêtes. La mise en oeuvre d'une telle méthode d'alignement aboutit à des taux de rebut importants car la dispersion naturelle des fibres dénudées en sortie du ruban est telle que les fibres peuvent glisser sur les arêtes qui séparent les canaux et, partant, être aiguillées vers un mauvais canal. Ce problème ne peut être atténué que par une attention et un doigté particulièrement soignés de l'opérateur. Ce type de dispositif d'alignement ne convient donc pas à une production de masse ou à un câblage devant être effectué par le client final.

Le brevet US 5 692 089 divulgue une structure de séparation et de prépositionnement d'un ensemble de fibres optiques, dans laquelle des fibres optiques sont introduites afin d'être séparées et prépositionnées, comprenant une pluralité de logements pour recevoir et prépositionner les fibres, un logement comprenant une paroi inférieure, une paroi supérieure et au moins une paroi latérale formée par la paroi latérale d'un premier motif, le premier motif présentant une arête frontale oblique par rapport à la paroi inférieure du logement et allant de la paroi inférieure du logement jusqu'à une partie haute du motif, la paroi latérale présentant au moins une surface de raccordement inclinée reliant l'arête frontale oblique au reste de la paroi latérale, une deuxième paroi du logement étant formée par une paroi latérale d'un second motif voisin du premier motif ou d'une paroi latérale du corps de la structure. Les deux parois latérales et la paroi supérieure d'un logement définissent une section transversale du logement en forme de triangle.

L'invention ne présente pas les inconvénients mentionnés ci-dessus.

En effet, l'invention concerne une structure de séparation et de prépositionnement d'un ensemble de fibres dans laquelle des fibres sont introduites afin d'être séparées et prépositionnées, la structure comprenant au moins deux logements voisins pour recevoir et prépositionner, chacun, une seule fibre, un logement comprenant une paroi inférieure, une paroi supérieure, une première paroi latérale et une deuxième paroi latérale, la première paroi latérale étant formée par la paroi latérale d'un premier motif, le premier motif présentant une arête frontale oblique par rapport à la paroi inférieure du logement et allant de la paroi inférieure du logement jusqu'à une partie haute du premier motif, la première paroi latérale présentant au moins une surface de raccordement inclinée reliant l'arête frontale oblique au reste de la première paroi latérale, la deuxième paroi latérale étant formée par une paroi latérale d'un second motif voisin du premier motif ou d'une paroi latérale du corps de la structure, caractérisé en ce que la partie haute du premier motif est distante de la paroi supérieure, par rapport au point le plus haut de l'arête frontale, d'une distance H inférieure ou égale à un diamètre de la fibre.

C'est pour la clarté de la description que les parois ont été nommées "paroi supérieure" et "paroi inférieure", étant bien entendu que la structure peut prendre toutes les positions dans l'espace ; ainsi, les notions de « supérieure », « inférieure », voire « latérale » restent relatives à un plan de référence arbitraire.

Avantageusement, la distance H est inférieure au diamètre de la fibre pour éviter tout risque de mauvais montage.

L'invention concerne également un dispositif adapté pour recevoir un ensemble de fibres séparées et prépositionnées à l'aide d'une structure selon l'invention. Le dispositif et la structure forment un système de positionnement des fibres pouvant être particulièrement précis. Le dispositif comprend, pour chaque fibre, une zone de guidage et une encoche de réception formée par un rétrécissement de la zone de guidage.

Dans l'application à la connexion de fibres optiques à un dispositif optique, la structure de séparation et de prépositionnement selon l'invention permet avantageusement de caler chaque fibre optique dans une position telle que, quelle que soit la position initiale des fibres, l'alignement des fibres avec le dispositif optique puisse s'opérer sans difficulté.

D'autres avantages et caractéristiques de l'invention apparaîtront à la lecture d'un mode de réalisation préférentiel de l'invention fait en référence aux figures jointes, parmi lesquelles :

- la figure 1 représente une structure d'alignement de fibres optiques par couplage de lumière selon l'art antérieur,
- la figure 2 représente une structure d'alignement de fibres optiques par guidage mécanique selon l'art antérieur,
- la figure 3 représente une vue de dessus d'une structure de séparation et de prépositionnement de fibres selon le mode de réalisation préférentiel de l'invention,
- les figures 4A et 4B représentent, chacune, une vue en perspective d'un exemple de motif de la structure de séparation et de prépositionnement de fibres selon l'invention,
- la figure 5 représente une première vue en coupe de la structure selon l'invention représentée en figure 3, (coupe AA),
- la figure 6 représente une deuxième vue en coupe de la structure selon l'invention représentée en figure 3, (coupe BB),
- la figure 7 représente une vue en coupe de la structure selon l'invention représentée en figure 5, (coupe CC),
- la figure 8 représente une troisième vue en coupe de la structure selon l'invention représentée en figure 3, cette coupe étant perpendiculaire aux parois supérieure et inférieure et dans l'axe des fibres,
- la figure 9 représente une vue de dessus de la structure de séparation et de prépositionnement de fibres selon le mode de réalisation préférentiel de l'invention associée à un dispositif pour recueillir les fibres séparées et prépositionnées,
- la figure 10 représente une vue de dessus d'un détail de la figure 9,
- la figure 11 représente une vue de dessus d'une fibre optique positionnée dans un dispositif destiné à recevoir un ensemble de fibres séparées et prépositionnées à l'aide d'une structure selon l'invention.
- la figure 12 représente une première vue en coupe de la figure 11, (coupe DD),
- La figure 13 représente une deuxième vue en coupe de la figure 11, (coupe EE).

Sur toutes les figures les mêmes repères désignent les mêmes éléments.

Les figures 1 et 2 ont été décrites précédemment, il est donc inutile d'y revenir.

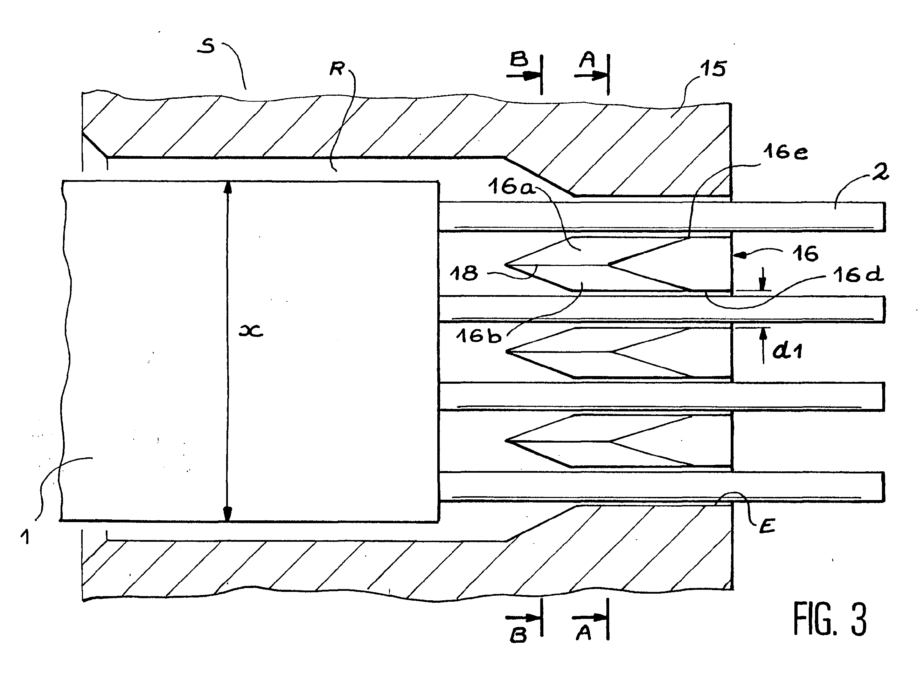

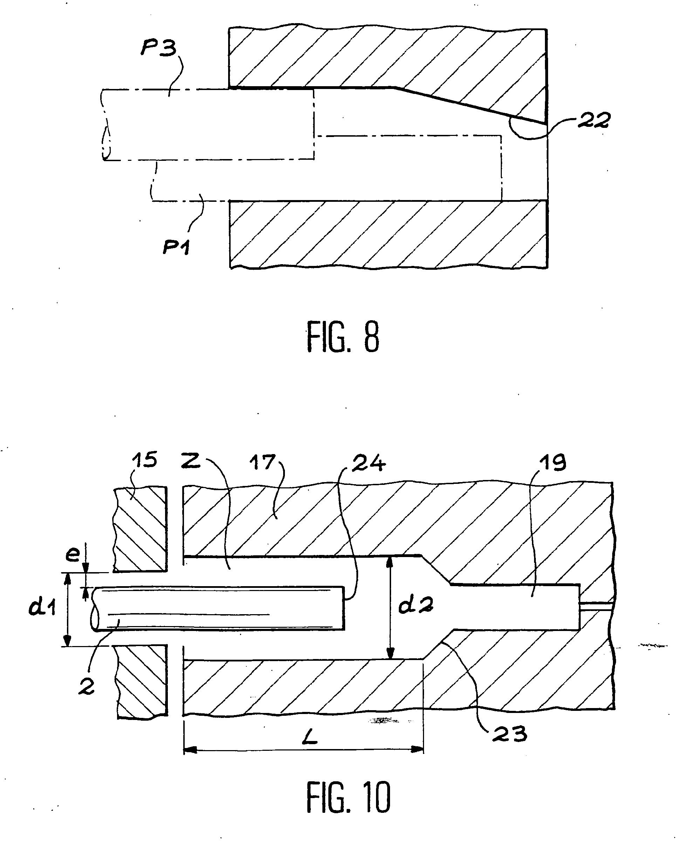

Afin de faciliter la compréhension de l'invention, la suite de la description sera faite en faisant référence simultanément aux figures 3 à 13.

la figure 3 représente une vue de dessus d'une structure de séparation et de prépositionnement de fibres selon le mode de réalisation préférentiel de l'invention. Un ruban 1 muni de fibres 2 est positionné dans la structure S.

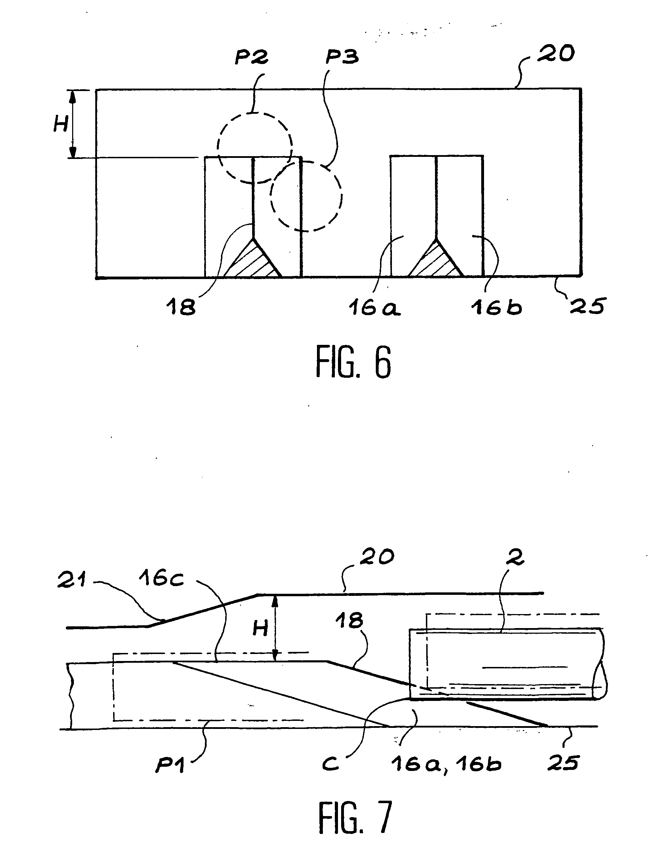

La structure S comprend un corps 15 à une extrémité duquel sont positionnés un ensemble de motifs 16 en parallèle. Chaque motif 16 comprend une arête 18 et deux parois latérales. Chaque paroi latérale présente une surface de raccordement inclinée (16a, 16b) reliant l'arête 18 au reste de la paroi latérale (16e, 16d) (cf. figures 3, 4A, 4B, 6 et 7). Les motifs 16 sont situés sur une paroi inférieure 25 de la structure (cf. figures 5, 6, 7). L'arête 18 est une arête frontale oblique par rapport à la paroi inférieure du logement et allant de la paroi inférieure du logement jusqu'à une partie haute 16c du motif.

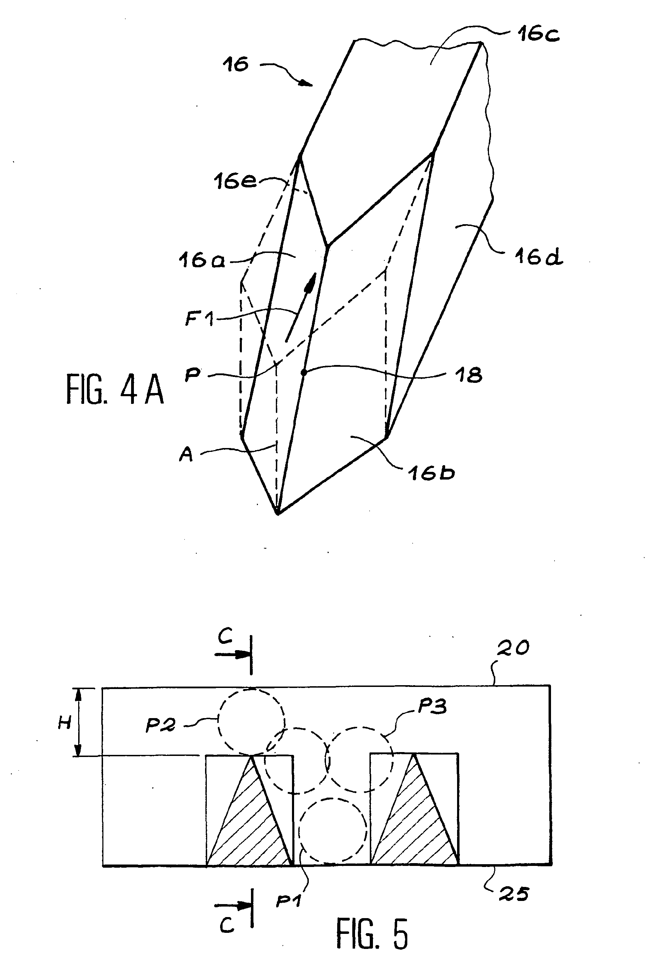

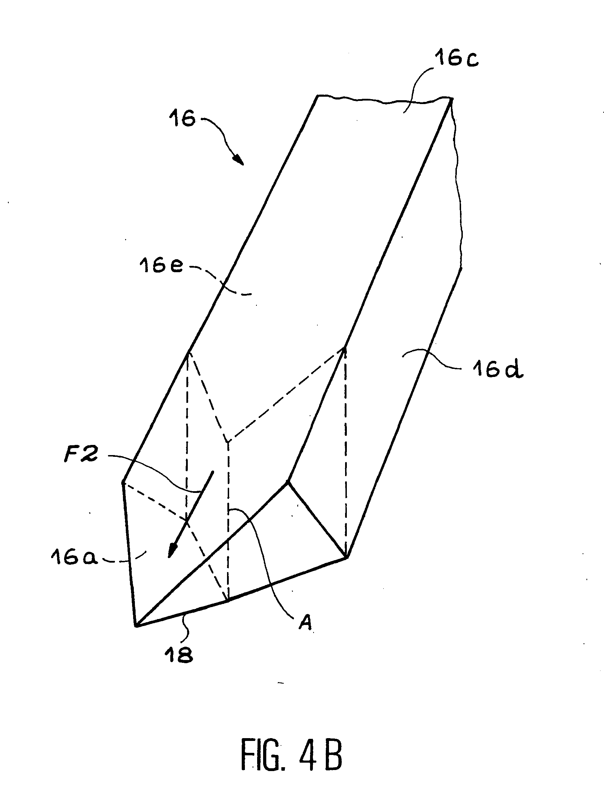

L'arête frontale 18 peut être inclinée « vers l'arrière » ou « vers l'avant ». Par inclinaison « vers l'arrière », il faut entendre que l'arête frontale va de la paroi inférieure du logement vers la partie haute du motif dans le sens d'introduction des fibres (cf. figures 4A et 7). De même, par inclinaison « vers l'avant », il faut entendre que l'arête frontale va de la paroi inférieure du logement vers la partie haute du motif dans le sens inverse du sens d'introduction des fibres (figure 4B).

Selon le mode de réalisation représenté sur l'ensemble des figures, la partie haute 16c présente une surface plane sensiblement parallèle à la paroi inférieure 25. Selon d'autres modes de réalisation de l'invention, la partie haute 16c n'est pas plane et n'est pas parallèle à la paroi inférieure 25.

Les figures 4A et 4B permettent de faciliter une meilleure compréhension de la géométrie d'un motif 16 selon l'invention. La figure 4A représente le mode de réalisation selon lequel l'arête 18 est inclinée « vers l'arrière » et la figure 4B représente le mode de réalisation selon lequel l'arête 18 est inclinée « vers l'avant » (cf. ci-dessus).

La géométrie en traits discontinus représente un parallélépipède dont la partie frontale biseautée définit une arête verticale A. La géométrie en traits pleins représente un motif 16 comprenant deux parois latérales (respectivement 16a, 16e et 16b, 16d), la partie haute 16c et l'arête frontale 18.

L'intersection entre l'arête A et le plan défini par la partie haute 16c est un point P. Pour construire, à partir de la géométrie en traits discontinus, la représentation d'un motif 16 dont l'arête est inclinée « vers l'arrière » (figure 4A), il suffit de déplacer le point P vers l'arrière de la figure, le long du plan défini par la partie haute 16c et dans le sens de la flèche F1 qui est le sens d'introduction des fibres dans la structure selon l'invention. De même, pour construire la représentation d'un motif 16 dont l'arête est inclinée « vers l'avant » (figure 4B), il suffit de déplacer le point P vers l'avant de la figure, le long du plan défini par la partie haute 16c et dans le sens de la flèche F2 qui est le sens inverse du sens d'introduction des fibres dans la structure selon l'invention.

Selon le mode de réalisation préférentiel de l'invention, une face latérale de motif 16 comprend une seule surface de raccordement inclinée (16a, 16b) entre l'arête frontale inclinée 18 et le reste de la paroi latérale (16e, 16d). De façon plus générale, l'invention concerne un motif 16 dont une face latérale comprend au moins une surface de raccordement inclinée entre l'arête frontale inclinée 18 et le reste de la paroi latérale.

Les motifs 16 présentent un pas et une géométrie tels que deux motifs consécutifs définissent avec la paroi inférieure 25 et une paroi supérieure ou capot 20 (cf. figures 5, 6, 7) un logement apte à recevoir une fibre. Lors du prépositionnement, une fibre quelconque 2 qui arrive en contact sur une des surfaces de raccordement inclinées 16a, 16b en un point C donné (cf. figure 7) est naturellement orientée vers sa position idéale P1 (cf. figures 5 et 7). Selon l'invention, il est possible de séparer, sans blocage, des fibres excentrées par rapport à leur position nominale d'une valeur égale à la moitié du pas des motifs 16 plus le rayon de la fibre. Cette séparation sans blocage est due à la présence de l'arête inclinée 18 (cf. figures 1, 4 et 7) et du capot 20 qui forcent une fibre excentrée de façon extrême (position P2 sur les figures 5 et 6) à basculer vers la position souhaitée P1 (cf. figures 5 et 7). L'arête inclinée 18 du motif 16 est au plus près du capot 20 à une distance H (cf. figures 5, 6, 7). La distance H est inférieure ou égale (de préférence inférieure) au diamètre de la fibre. Une inclinaison du capot 20 contribue à placer la fibre dans la position idéale P1 qu'elle doit occuper (cf. figure 7). La fonction de prépositionnement suit la fonction de séparation décrite ci-dessus. La fonction de prépositionnement a pour but de ramener les fibres excentrées (cf. positions P2 et P3 sur la figure 6) vers la position centrale P1.

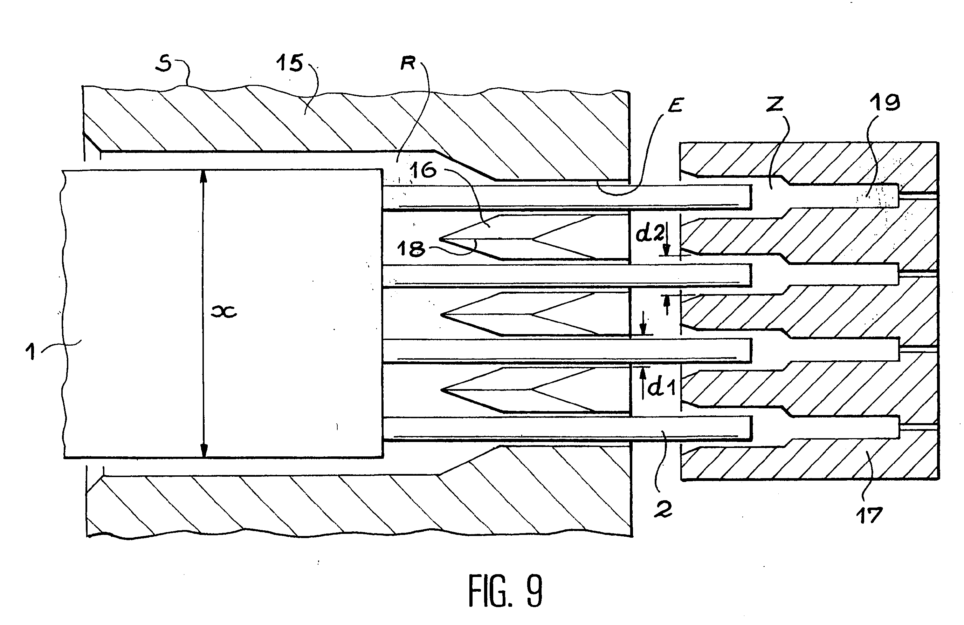

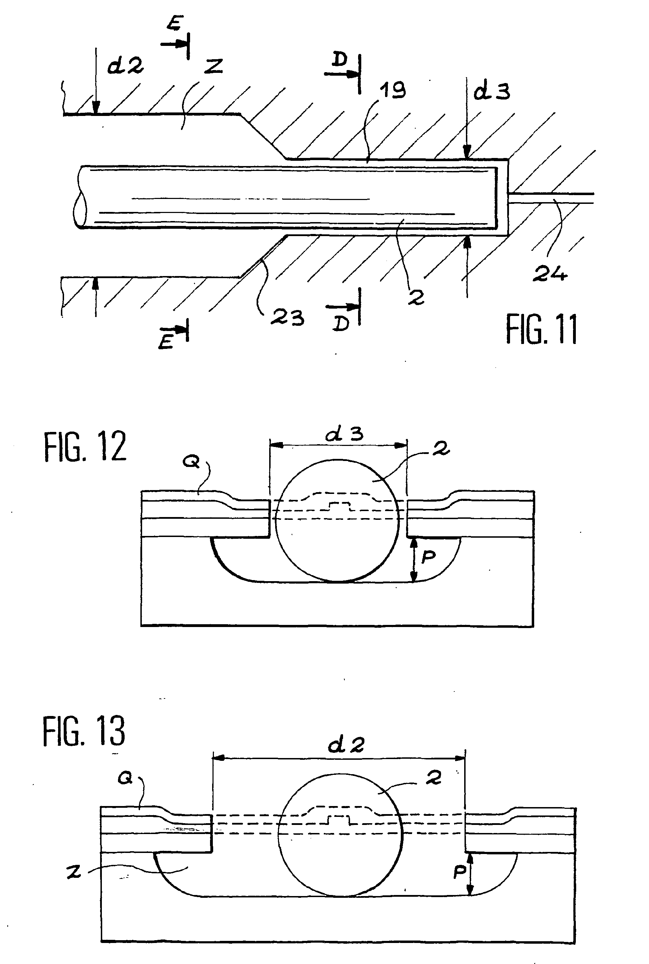

Une fibre 2 prépositionnée dans le dispositif selon l'invention reste mobile selon son axe, avec un jeu latéral e (cf. figure 10) qui lui permet d'être guidée dans une encoche de précision 19 (cf. figures 9 et 10) située dans un dispositif 17 (cf. figures 9 et 10), par exemple un dispositif optique, qui est destiné à la recevoir.

La largeur d1 qui sépare deux motifs 16 successifs doit être inscrite dans la largeur d2 d'une zone de guidage Z du dispositif 17 destiné à recevoir les fibres (cf. figures 9 et 10). Préférentiellement, la zone de guidage Z est réalisée lors de l'opération durant laquelle est réalisée l'encoche de précision 19 qui la prolonge. L'inclinaison 21 du capot 20 permet à la fibre (cf. figure 10) de pénétrer facilement dans la zone Z. Une fois l'introduction de la fibre dans la zone Z effectuée, la fibre est guidée dans l'encoche 19 par un rétrécissement 23 de la zone Z. Dans le cas d'un positionnement de fibres optiques en regard de guides optiques, l'invention permet avantageusement un alignement quasi parfait de chaque fibre optique avec un guide optique.

Comme cela a été mentionné précédemment, les fibres 2 sont généralement enfichées sur un ruban 1. En amont des logements de prépositionnement des fibres, la structure comprend alors une rainure R pour guider le ruban 1.

La structure selon l'invention présente l'avantage de séparer les fibres les unes des autres de façon optimale sans pour autant les immobiliser. Une fibre reste mobile selon son axe avec un léger jeu latéral e qui lui permet d'être guidée sans contrainte dans une encoche 19. Durant cette opération de prépositionnement les fibres ne subissent pas de chocs agressifs sur les arêtes de leur face, évitant ainsi les ébréchures. Plusieurs réinsertions d'un même bloc de fibres peuvent alors être envisagées.

Comme cela a été mentionné ci-dessus, l'objet de l'invention est particulièrement avantageux pour la réalisation d'un dispositif complet de couplage fiabilisé de rubans de fibres optiques à un circuit d'optique intégrée combinant les précisions caractéristiques du micro-usinage de substrat (quelques dixièmes de micron) avec les précisions relatives à des procédés à bas coût comme le moulage par injection plastique (tolérances de 5 à 30 microns).

Le dispositif de couplage d'un ruban de fibres optiques à un circuit d'optique intégrée présente alors les caractéristiques qui vont être énumérées ci-après.

Une zone Z destinée à recevoir une fibre a une section droite avantageusement en forme de U (d'autres formes peuvent bien entendu être utilisées) comme représenté en figure 13 (la figure 13 est la vue selon la coupe EE de la figure 11). Le fond de l'encoche 19 a préférentiellement la même profondeur P que la zone Z et également une section droite en forme de U. L'encoche 19 est réalisée par un rétrécissement de la partie supérieure de la zone Z (figure 12). Le rétrécissement est réalisé, par exemple, à l'aide de couches Q disposées sur un substrat dans lequel est formé le fond du U (cf. figure 12). La zone Z et le fond de l'encoche 19 sont préférentiellement réalisés dans un même substrat (mono ou multicouches) afin de réduire les frottements lors du passage de la fibre.

Les microguides et les encoches sont réalisés par des procédés de gravure similaires, avec des masques positionnés sur le même repère, la tolérance de position relative d'une encoche par rapport au microguide étant de quelques dixièmes de microns. Pour une fibre optique de diamètre, par exemple, égal à 125 $\mu$m, une encoche 19 a une largeur d3 typiquement comprise entre 125,5 $\mu$m et 127 $\mu$m (selon la précision du positionnement souhaitée). Pour avoir une erreur d'alignement angulaire inférieure à 0,25 degré, la longueur dé l'encoche 19 doit être respectivement égale à environ 115 $\mu$m et 460 $\mu$m. La paroi entre les encoches 19 peut être de faible épaisseur. Il est alors possible de réaliser des zones Z de préguidage de largeur d2 (cf. figure 12) sensiblement comprise, par exemple, entre 150 $\mu$m et 200 $\mu$m.

L'introduction d'une fibre dans une zone Z force la fibre à se centrer dans la zone, puis à glisser, d'abord, au fond de la zone Z de pré-guidage et, ensuite, au fond de l'encoche 19. La longueur de la zone Z de préguidage définit les déformations et donc les contraintes maximales que subit la fibre en s'alignant. Pour cette raison, la distance qui sépare l'entrée de la zone Z, de l'encoche 19 est L telle que :

$$L \geq \frac{\pi}{2} \sqrt{R_{min} \; x \; \Delta U} \, ,$$

avec $R_{min}$ un rayon de courbure minimal induit sur la fibre, choisi pour ne pas fragiliser la fibre et $\Delta U$ la différence entre la largeur d2 de la zone Z de pré-guidage et la largeur d3 de l'encoche 19. Dans la pratique, un point d'impact de la fibre situé entre 800 $\mu$m et 3 mm de l'extrémité de la zone de guidage répond aux contraintes mentionnées ci-dessus.

Le guidage final selon l'axe des fibres est effectué en poussant les fibres face au substrat et en les plaquant au fond des encoches. L'espace entre fibre et guide optique peut être rempli de gel d'adaptation d'indice. Le plaquage des fibres au fond des encoches peut également être effectué à l'aide de patins élastomères. De façon plus générale, la connexion selon l'invention est facilement démontable et réinsérable. La connexion peut également être permanente. Il est alors possible de coller définitivement les fibres sur le substrat. Par ailleurs, le ruban 1 peut être fixé à la structure 15 par une pièce de blocage mécanique disposée, par exemple, le long de la rainure R de guidage du ruban. Cette pièce de blocage est par exemple un patin élastomère maintenu en pression sur la structure (S).

## Revendications

**1.** Structure (S) de séparation et de prépositionnement d'un ensemble de fibres (2) dans laquelle des fibres sont introduites afin d'être séparées et prépositionnées, la structure comprenant un corps (15) à une extrémité duquel est positionné au moins un motif (16) qui présente une première paroi latérale (16a + 16b) et une deuxième paroi latérale (16b + 16e), un logement pour recevoir et prépositionner une fibre étant formé par une paroi inférieure (25) du corps de la structure, une paroi supérieure (20), une paroi latérale d'un premier motif et, soit, une paroi latérale d'un second motif voisin du premier motif, soit, une paroi latérale du corps de la structure, le motif (16) présentant une arête frontale oblique (18) par rapport à la paroi inférieure (25) du corps de la structure et allant de la paroi inférieure (25) du corps de la structure jusqu'à une partie haute (16c) du motif, la première et la deuxième parois latérales du motif présentant, chacune, au moins une surface de raccordement inclinée (16a, 16b) reliant l'arête frontale oblique (18) au reste (16d, 16e) de la paroi latérale, **caractérisée en ce que** la partie haute du motif (16c) est distante de la paroi supérieure (20), par rapport au point le plus haut de l'arête frontale, d'une distance H inférieure ou égale à un diamètre de la fibre.

**2.** Structure selon la revendication 1, **caractérisée en**

**ce que** la partie haute (16c) du motif (16) est sensiblement parallèle à la paroi inférieure (25) du corps de la structure.

3. Structure selon la revendication 1, **caractérisée en ce que** la partie haute (16c) du motif est une partie non plane.

4. Structure selon l'une quelconque des revendications 1 à 3, **caractérisée en ce que** la paroi supérieure (20) présente une inclinaison (21) qui la rapproche de la partie haute (16c) du motif pour recentrer la fibre selon un axe prédéfini.

5. Structure selon l'une quelconque des revendications précédentes, **caractérisée en ce que** la paroi supérieure (20) recouvre au moins la totalité de la partie haute (16c) du motif.

6. Structure selon l'une quelconque des revendications précédentes, **caractérisée en ce qu'**elle comprend, en amont du logement, une rainure (R) pour guider un ruban (1) sur lequel les fibres (2) sont enfichées.

7. Structure selon la revendication 6, **caractérisée en ce qu'**elle comprend une pièce de blocage mécanique le long de la rainure (R) afin de fixer le ruban (1).

8. Procédé de séparation et de prépositionnement de fibres optiques, **caractérisé en ce que** les fibres optiques sont séparées et prépositionnées à l'aide d'une structure de séparation et de prépositionnement selon l'une quelconque des revendications 1 à 7.

9. Système de positionnement comprenant un dispositif destiné à recevoir un ensemble de fibres et une structure selon l'une des revendications 1 à 7, **caractérisé en ce que** ledit dispositif comprend, pour chaque fibre, une zone de guidage (Z) et une encoche de réception (19) de la fibre formée par un rétrécissement (23) de la zone de guidage (Z), la zone de guidage (Z) ayant une largeur (d2) supérieure à une largeur (d1) qui sépare deux motifs (16) successifs de la structure.

10. Système selon la revendication 9, **caractérisé en ce que** la zone de guidage et/ou l'encoche de réception comportent une section droite en forme de U.

11. Système selon la revendication 9 ou 10, **caractérisé en ce que** chaque zone (Z) de guidage a une longueur L telle que :

$$L \geq \frac{\pi}{2} \sqrt{R_{min} \ x \ \Delta U} \ ,$$

avec $R_{min}$ un rayon de courbure minimal choisi pour ne pas fragiliser la fibre et $\Delta U$ la différence entre la largeur (d2) de la zone de guidage (Z) et la largeur (d3) de l'encoche de réception (19).

12. Système selon la revendication 11, **caractérisé en ce que** la longueur L est comprise entre 0,8 mm et 3 mm.

13. Système selon l'une quelconque des revendications 9 à 12, **caractérisé en ce que** la largeur (d2) d'une zone de guidage (Z) est sensiblement comprise entre 150 $\mu$m et 200 $\mu$m.

14. Système selon l'une quelconque des revendications 9 à 13, **caractérisé en ce que** l'encoche (19) a une largeur (d3) sensiblement comprise entre 125,5 $\mu$m et 127 $\mu$m lorsque le diamètre de la fibre (2) est sensiblement égal à 125 $\mu$m.

15. Sytème selon l'une quelconque des revendications 9 à 14, **caractérisé en ce que** le dispositif optique comprend au moins un microguide.

## Claims

1. Structure (S) for the separation and prepositioning of a set of fibres (2) into which the fibres are introduced in order to be separated and prepositioned, the structure comprising a body (15) at one end of which is positioned at least one pattern (16) having a first side wall (16a + 16b) and a second side wall (16b + 16e), a recess for receiving and prepositioning a fibre being formed by a bottom wall (25) of the body of the structure, a top wall (20), a side wall of a first pattern and, either a side wall of a second pattern adjacent to the first pattern, or a side wall of the body of the structure, the pattern (16) having an oblique front edge (18) with respect to the bottom wall (25) of the body of the structure and extending from the bottom wall (25) of the body of the structure to an upper part (16c) of the pattern, each of the first and second side walls of the pattern having at least one inclined connection surface (16a, 16b) connecting the oblique front edge (18) to the remainder (16d, 16e) of the side wall, **characterized in that** the upper part of the pattern (16c) is spaced from the top wall (20), relative to the highest point of the front edge, by a distance (H) equal to or less than a diameter of the fibre.

2. Structure according to claim 1, **characterized in that** the upper part (16c) of pattern (16) is substantially parallel to the bottom wall (25) of the body of the structure.

3. Structure according to claim 1, **characterized in**

**that** the top part (16c) of the pattern is non-planar.

4. Structure according to any one of claims 1 to 3, **characterized in that** the top wall (20) has an inclination (21) that brings it towards the top part (16c) of the pattern to reenter the fibre along a predefined axis.

5. Structure according to any one of the previous claims, **characterized in that** the top wall (20) covers at least all the top part (16c) of the pattern.

6. Structure according to any one of the previous claims, **characterized in that** it comprises a groove (R) on the input side of the recess to guide a ribbon (1) on which the fibres (2) are inserted.

7. Structure according to claim 8, **characterized in that** it comprises a mechanical blocking part along the groove (R) in order to fix the ribbon (1).

8. Method for the separation and prepositioning of optical fibres, **characterized in that** the optical fibres are separated and prepositioned with the aid of a separation and prepositioning structure according to any one of the claims 1 to 7.

9. Positioning system comprising a device for receiving a set of fibres and a structure according to any one of the claims 1 to 7, **characterized in that** said device comprises, for each fibre, a guidance area (7) and a reception notch (19) for the fibre formed by a narrowing (23) of the guidance area (Z), said guidance area (Z) having a width (d2) exceeding a width (d1) separating two successive patterns (16) of the structure.

10. System according to claim 9, **characterized in that** the guidance zone and/or the reception notch have a U-shaped cross-section.

11. System according to claim 9 or 10, **characterized in that** the length L of each guidance zone (Z) is such that:

$$L \geq 2 \frac{\pi}{\sqrt{R_{min} \, x \Delta U}} \, ,$$

where $R_{min}$ is a minimum radius of curvature chosen to not embrittle the fibre and $\Delta U$ is the difference between the width (d2) of the guidance zone (Z) and the width (d3) of the reception notch (19).

12. System according to claim 11, **characterized in that** the length L is between 0.8 mm and 3 mm.

13. System according to any one of claims 9 to 12, **char-**

**acterized in that** the width (d2) of a guidance zone (Z) is substantially between 150 μm and 200 μm.

14. System according to any one of claims 9 to 13, **characterized in that** the width (d3) of the notch (19) is approximately between 125.5 μm and 127 μm when the diameter of the fibre (2) is approximately equal to 125 μm.

15. System according to any one of the claims 9 to 14, **characterized in that** the optical device comprises at least one microguide.

**Patentansprüche**

1. Struktur (S) zur Trennung und Vorpositionierung einer Gruppe von Fasern (2), in die Fasern so eingeführt werden, dass sie getrennt und vorpositioniert sind, wobei die Struktur ein Gehäuse (15) umfasst, an dessen einem Ende wenigstens ein Muster (16) positioniert ist, das eine erste seitliche Wand (16a + 16e) und eine zweite seitliche Wand (16b + 16d) aufweist, und ein Sitz zur Aufnahme und Vorpositionierung einer Faser gebildet wird durch eine untere Wand (25) des Gehäuses der Struktur, eine obere Wand (20), eine seitliche Wand eines ersten Musters und entweder eine seitliche Wand eines dem ersten Muster benachbarten zweiten Musters oder eine seitliche Wand des Gehäuses der Struktur, wobei das Muster (16) eine Frontalkante (18) aufweist, die schräg ist in Bezug auf die untere Wand (25) des Gehäuses der Struktur und von der unteren Wand (25) des Gehäuses der Struktur bis zu einer Oberseite (16c) des Musters verläuft, wobei die erste und die zweite seitliche Wand des Musters jeweils wenigstens eine geneigte Verbindungsfläche (16a, 16b) aufweisen, die die Frontalkante (18) mit dem Rest (16d, 16e) der seitlichen Wand verbinden,
**dadurch gekennzeichnet, dass** die Oberseite (16c) des Musters, bezogen auf den höchsten Punkt der Frontalkante, von der oberen Wand (20) einen Abstand H kleiner oder gleich einem Durchmesser der Faser hat.

2. Struktur nach Anspruch 1, **dadurch gekennzeichnet, dass** die Oberseite (16c) des Musters (16) im Wesentlichen parallel zu der unteren Wand (25) des Gehäuses der Struktur ist.

3. Struktur nach Anspruch 1, **dadurch gekennzeichnet, dass** die Oberseite (16c) des Musters eine unebene Seite ist.

4. Struktur nach einem der Ansprüche 1 bis 3, **dadurch gekennzeichnet, dass** die obere Wand (20) eine Schräge (21) aufweist, die sich der Oberseite (16c) des Musters nähert und der Neuzentrierung der Faser gemäß einer vordefinierten Achse dient.

5. Struktur nach einem der vorangehenden Ansprüche, **dadurch gekennzeichnet, dass** die obere Wand (20) wenigstens die Gesamtheit der Oberseite des Musters (16c) überdeckt.

6. Struktur nach einem der vorangehenden Ansprüche, **dadurch gekennzeichnet, dass** sie einen vor dem genannten Sitz befindlichen Schlitz (R) zur Führung eines Streifens (1) umfasst, in dem die Fasern (2) stecken.

7. Struktur nach Anspruch 6, **dadurch gekennzeichnet, dass** sie ein Stück bzw. eine Einrichtung zur mechanischen Blockierung längs des Schlitzes (R) umfasst, um den Streifen (1) zu fixieren.

8. Verfahren zur Trennung und Vorpositionierung von optischen Fasern, **dadurch gekennzeichnet, dass** die optischen Fasern mit Hilfe einer Struktur zur Trennung und Vorpositionierung nach einem der Ansprüche 1 bis 7 getrennt und vorpositioniert werden.

9. Positionierungssystem mit einer Vorrichtung zur Aufnahme einer Gruppe von Fasern und einer Struktur nach einem der Ansprüche 1 bis 7, **dadurch gekennzeichnet, dass** die Vorrichtung für jede Faser eine Führungszone (Z) umfasst und zur Aufnahme der Faser eine Verengung (23) der Führungszone (Z) und eine Vertiefung (19), wobei die Führungszone (Z) eine Breite (d2) aufweist, die größer ist als eine Breite (d1), die zwei sukzessive Muster (16) der Struktur trennt.

10. System nach Anspruch 9, **dadurch gekennzeichnet, dass** die Führungszone (Z) und/oder die Aufnahmevertiefung (19) einen U-förmigen geradlinigen Querschnitt aufweisen.

11. System nach Anspruch 9 oder 10, **dadurch gekennzeichnet, dass** jede Führungszone (Z) folgende Länge L hat:

$$L \geq \frac{\pi}{2} \sqrt{R_{min} \text{ x } \Delta U} ,$$

mit $R_{min}$ als einem minimalen Krümmungsradius, so gewählt, dass die Faser nicht geschwächt wird, und $\Delta U$ als der Differenz zwischen der Breite (d2) der Führungszone (Z) und der Breite (d3) der Aufnahmevertiefung (19)

12. System nach Anspruch 11, **dadurch gekennzeichnet, dass** die Länge L zwischen 0,8 mm und 3 mm enthalten ist.

13. System nach einem der Ansprüche 9 bis 12, **dadurch gekennzeichnet, dass** die Breite (d2) einer Führungszone (Z) im Wesentlichen zwischen 150 $\mu$m und 200 $\mu$m enthalten ist.

14. System nach einem der Ansprüche 9 bis 13, **dadurch gekennzeichnet, dass** die Vertiefung (19) eine Breite (d3) aufweist, die im Wesentlichen zwischen 125,5 $\mu$m und 127 $\mu$m enthalten ist, wenn der Durchmesser der Faser im Wesentlichen gleich 125 $\mu$m ist.

15. System nach einem der Ansprüche 9 bis 14, **dadurch gekennzeichnet, dass** die optische Vorrichtung wenigstens einen Mikroleiter umfasst.

FIG. 1

FIG. 2

FIG. 3

FIG. 4 A

FIG. 5

16c

16

16e

16d

F2

16a

18

A

## FIG. 4 B

FIG. 6

FIG. 7

FIG. 8

FIG. 10

FIG. 9

FIG. 11

FIG. 12

FIG. 13